# EUROPEAN PATENT APPLICATION

(11) **EP 4 807 441 A1**
(43) Date of publication of application: **16.09.2026**
(21) Application number: 24888992.5
(22) Date of filing: 25.10.2024
(51) Int. Cl.: G03B 11/04, G03B 17/02, H04N 23/51

(54) **POSTURE ADJUSTMENT DEVICE**

(30) Priority: 06.11.2023 KR 20230151510
(71) Applicant: Hanwha Vision Co., Ltd., Seongnam-si, Gyeonggi-do 13488 (KR)
(72) Inventor: CHOI, Eun Soo, Seongnam-Si Gyeonggi-do 13488 (KR)
(74) Representative: Gulde & Partner
(86) International application number: PCT/KR2024/016363
(87) International publication number: WO 2025/100803

(57) **Abstract**

The present disclosure relates to an attitude adjustment apparatus (10), and more particularly, to an attitude adjustment apparatus (10) capable of adjusting an attitude of a camera (200) with respect to a sunshield (300).

According to an embodiment of the present disclosure, the attitude adjustment apparatus (10) includes a camera housing (100) configured to accommodate a camera (200), and a sunshield (300) configured to block sunlight entering the camera housing (100). The camera housing (100) includes a front housing **(110)** disposed at one side of the sunshield (300) and a main housing (120) disposed at the other side of the sunshield (300) and coupled to the front housing (110), and by coupling the front housing **(110)** and the main housing (120), the camera housing (100) is rotatably coupled to the sunshield (300).

## Description

### [TECHNICAL FIELD]

The present disclosure relates to an attitude adjustment apparatus, and more particularly, to an attitude adjustment apparatus capable of adjusting an attitude of a camera with respect to a sunshield.

### [BACKGROUND ART]

A camera may be used for surveillance of a target place. A user may perform surveillance of the place by referring to an image captured by the camera.

When light from a light source, rather than light reflected by a subject, directly enters the camera, a normal image may not be generated. In particular, when sunlight enters the camera, not only may a normal image fail to be generated, but also an image sensor provided in the camera may be damaged.

In order to prevent sunlight or illumination light from directly entering the camera, a sunshield may be attached to the camera. Since the sunshield blocks sunlight or illumination light, the camera may generate a normal image.

Meanwhile, when it is desired to rotate the camera with respect to an optical axis, an operation of separating the sunshield from the camera and an operation of reattaching the sunshield to the camera may be required. The difficulty of such operations may vary depending on a coupling relationship between the sunshield and the camera.

Accordingly, there is a need for an invention that facilitates adjustment of the attitude of the camera with respect to the sunshield.

### [DISCLOSURE]

### [Technical Problems]

An object of the present disclosure is to provide an attitude adjustment apparatus capable of adjusting an attitude of a camera with respect to a sunshield.

The objects of the present disclosure are not limited to the above-mentioned object, and other objects not mentioned herein will be clearly understood by one of ordinary skill in the art from the following description.

### [Technical Solutions]

An attitude adjustment apparatus according to an embodiment of the present disclosure includes: a camera housing configured to accommodate a camera; and a sunshield configured to block sunlight entering the camera housing. The camera housing may include: a front housing disposed at one side of the sunshield; and a main housing disposed at the other side of the sunshield and coupled to the front housing, and by coupling the front housing and the main housing, the camera housing may be rotatably coupled to the sunshield.

The front housing and the main housing may be coupled in a direction parallel to an optical axis of the camera.

A coupled body of the front housing and the main housing may form a guide groove having a ring shape formed about an optical axis of the camera, and the sunshield may include a guide portion inserted into the guide groove.

The guide portion may have a thickness corresponding to a width of the guide groove.

The sunshield may include a first elastic rib configured to be in close contact with one side surface of the main housing by elastic force.

The first elastic rib may include a coupling protrusion protruding toward the main housing, and the main housing may include a coupling groove into which the coupling protrusion is insertable.

At least one of the coupling protrusion and the coupling groove may be provided in a plurality at preset intervals along a ring shape formed about an optical axis of the camera.

The preset intervals may include intervals that allow the camera housing to be fixed to the sunshield whenever the camera housing rotates by an angle of 90 degrees about the optical axis of the camera.

The front housing may have a ring shape formed about an optical axis of the camera and comprises a support ring protruding toward the sunshield, and the sunshield may include a second elastic rib configured to be in close contact with one side surface of the support ring by elastic force.

An elastic force of the second elastic rib may include a component in a direction perpendicular to an optical axis of the camera.

The camera housing may be rotatable with respect to the sunshield about an optical axis of the camera.

The sunshield may include a light blocking portion protruding forward relative to a foremost edge of the camera housing.

The sunshield may be provided in a cylindrical shape to surround the camera housing.

The sunshield and the camera housing may be coupled such that a central axis of the sunshield coincides with a central axis of the camera housing.

An attitude adjustment apparatus according to an embodiment of the present disclosure includes: a camera housing configured to accommodate a camera; and a sunshield configured to block sunlight entering the camera housing. The sunshield may be provided in a cylindrical shape, and the camera housing may be inserted into the sunshield and may be rotatably coupled to the sunshield.

The camera housing may include: a front housing disposed at one side of the sunshield; and a main housing disposed at the other side of the sunshield and coupled to the front housing, and by coupling the front housing and the main housing, the camera housing may be rotatably coupled to the sunshield.

The front housing and the main housing may be coupled in a direction parallel to an optical axis of the camera.

The camera housing may be rotatable with respect to the sunshield about an optical axis of the camera.

The sunshield and the camera housing may be coupled such that a central axis of the sunshield coincides with a central axis of the camera housing.

The sunshield may include a light blocking portion protruding forward relative to a foremost edge of the camera housing.

Specific details of other embodiments are included in the detailed description and the drawings.

### [Advantageous Effects]

According to the attitude adjustment apparatus of the present disclosure as described above, since the attitude of the camera may be adjusted with respect to the sunshield without releasing the coupling between the sunshield and the camera, there is an advantage in that adjustment of the attitude of the camera is facilitated.

The effects of the present disclosure are not limited to the above-mentioned effects, and other effects not mentioned herein will be clearly understood by those skilled in the art from the description of the claims.

### [BRIEF DESCRIPTION OF DRAWINGS]

FIG. 1 is a perspective view of an attitude adjustment apparatus according to an embodiment of the present disclosure.
FIG. 2 is an exploded perspective view of the attitude adjustment apparatus according to an embodiment of the present disclosure.
FIG. 3 is a view illustrating rotation of a camera housing with respect to a sunshield.
FIG. 4 is a view for explaining switching of an arrangement mode of an image generated by a camera.
FIG. 5 is a perspective view of a front housing.
FIG. 6 is a perspective view of a main housing.
FIG. 7 is a view illustrating a state in which the front housing and the main housing are coupled.
FIG. 8 is a view illustrating a sunshield.
FIG. 9 is a front view of the sunshield.
FIG. 10 is a rear view of the sunshield.
FIG. 11 is a side cross-sectional view of the sunshield.
FIG. 12 is a view illustrating a state in which the sunshield is coupled to the camera housing.
FIG. 13 is a view illustrating coupling of the sunshield to the front housing.
FIG. 14 is a view illustrating a state in which the sunshield is coupled to the front housing.
FIG. 15 is a view illustrating rotation of the main housing with respect to the sunshield.

### [BEST MODES FOR CARRYING OUT THE INVENTION]

Hereinafter, preferred embodiments of the present disclosure will be described in detail with reference to the accompanying drawings. Advantages and features of the present disclosure, and methods for achieving the same, will become apparent with reference to the embodiments described below in detail in conjunction with the accompanying drawings. However, the present disclosure is not limited to the embodiments disclosed below and may be implemented in various different forms. The embodiments are provided only to make the present disclosure complete and to fully inform one of ordinary skill in the art of the scope of the invention, and the present disclosure is defined only by the scope of the claims. Throughout the specification, like reference numerals refer to like components.

Unless otherwise defined, all terms used herein, including technical and scientific terms, may be understood as having meanings commonly understood by one of ordinary skill in the art to which the present disclosure pertains. Terms defined in commonly used dictionaries should not be interpreted ideally or excessively unless clearly specially defined.

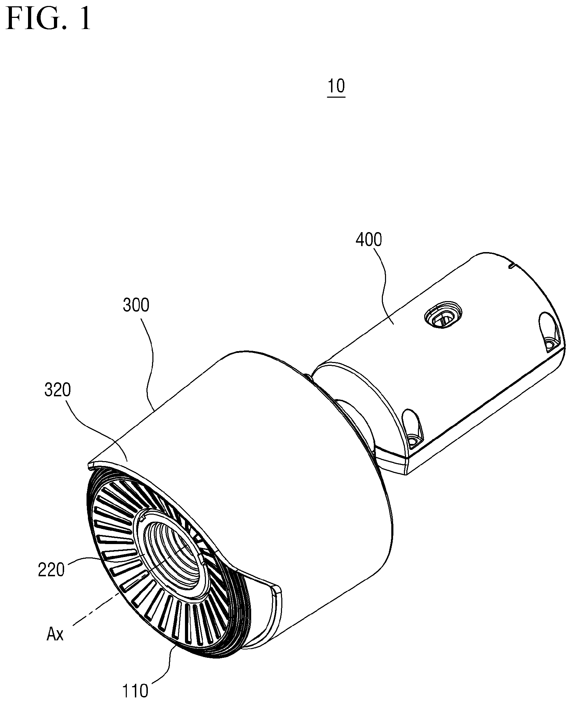

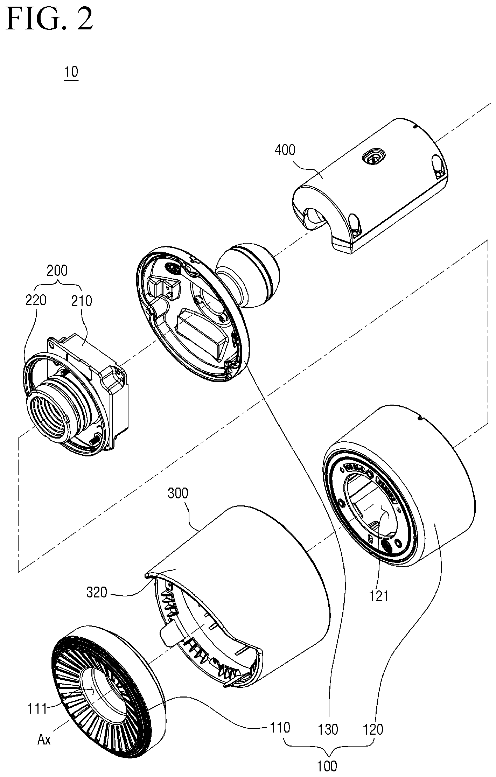

FIG. 1 is a perspective view of an attitude adjustment apparatus according to an embodiment of the present disclosure, and FIG. 2 is an exploded perspective view of the attitude adjustment apparatus according to an embodiment of the present disclosure.

Referring to FIGS. 1 and 2, an attitude adjustment apparatus 10 according to an embodiment of the present disclosure includes a camera housing 100, a camera 200, a sunshield 300, and a bracket 400.

The camera housing 100 may accommodate the camera 200. The camera housing 100 may include a front housing 110, a main housing 120, and a rear housing 130.

The front housing 110 may be provided in a ring shape and may be disposed at a front side of the camera housing 100. The front housing 110 may include a front hole 111 through which a lens unit 220 of the camera 200 passes. The lens unit 220 of the camera 200 exposed to the outside through the front hole 111 may receive external light.

The main housing 120 may be provided in a cylindrical shape and may accommodate a camera body 210 of the camera 200. The main housing 120 may include a main hole 121 through which the lens unit 220 of the camera 200 passes. The lens unit 220 of the camera 200 may pass through the main hole 121 of the main housing 120 and the front housing 110 of the front housing 110 and may be exposed to the outside.

The rear housing 130 may be provided in a disk shape and may seal one side opening of the main housing 120. By coupling the main housing 120 and the rear housing 130, an accommodation space for accommodating the camera 200 may be formed. The rear housing 130 may be coupled to the bracket 400. An attitude of the rear housing 130 with respect to the bracket 400 may be adjusted. According to the attitude of the rear housing 130 with respect to the bracket 400, an imaging direction of the camera 200 may be changed.

The camera 200 may generate an image by performing imaging in the imaging direction. The camera 200 may include the camera body 210 and the lens unit 220.

The camera body 210 may include an image sensor (not illustrated). The image sensor may generate an image using light incident through the lens unit 220. For example, a charge-coupled device (CCD) or a complementary metal-oxide semiconductor (CMOS) device may serve as the image sensor.

The lens unit 220 may receive light from a subject and a background. The lens unit 220 may include a plurality of lenses (not illustrated). The plurality of lenses may be arranged side by side along an optical axis Ax of the lens unit 220 and may sequentially transmit light. The lens unit 220 may include various lenses that concentrate light, sharpen a boundary of a subject, enhance color, reduce shape distortion of a subject, or magnify a subject.

The sunshield 300 serves to block sunlight entering the camera housing 100. For this purpose, the sunshield 300 may include a light blocking portion 320 protruding forward relative to a foremost portion of the camera housing 100. The light blocking portion 320 may be disposed on an upper side of the camera housing 100. In this case, light irradiated from above toward the camera housing 100, such as sunlight, may be blocked by the light blocking portion 320.

The sunshield 300 may be provided in a cylindrical shape to surround the camera housing 100. That is, an inner surface of the sunshield 300 may be in close contact with an outer surface of the camera housing 100. The camera housing 100 may be inserted into the sunshield 300 and may be rotatably coupled to the sunshield 300. For this purpose, the sunshield 300 and the camera housing 100 may be coupled such that a central axis of the sunshield 300 coincides with a central axis of the camera housing 100. Accordingly, as described later, the camera housing 100 may rotate with respect to the sunshield 300 about the central axis. Here, the central axis may correspond to the optical axis Ax of the camera 200.

The front housing 110 may be disposed at one side of the sunshield 300, and the main housing 120 may be disposed at the other side of the sunshield 300 and may be coupled to the front housing 110. In a state in which the front housing 110 is disposed at a front side of the sunshield 300, the main housing 120 may pass through the sunshield 300 from a rear side of the sunshield 300 and then may be coupled to the front housing 110. That is, the front housing 110 and the main housing 120 may be coupled in a direction parallel to the optical axis Ax of the camera 200.

By coupling the front housing 110 and the main housing 120, the camera housing 100 may be rotatably coupled to the sunshield 300. When the front housing 110 and the main housing 120 are coupled, separation between the camera housing 100 and the sunshield 300 may be prevented, and mutual rotation between the camera housing 100 and the sunshield 300 may be enabled.

The bracket 400 may provide a reference for an attitude of the camera housing 100. For example, the bracket 400 may be coupled to a reference object such as a ceiling or a wall, or may be coupled to another bracket (not illustrated). As the attitude of the camera housing 100 with respect to the bracket 400 is adjusted, the imaging direction of the camera 200 may be changed. Meanwhile, according to some embodiments of the present disclosure, the bracket 400 may fix the attitude of the camera housing 100 while preventing rotation of the camera housing 100.

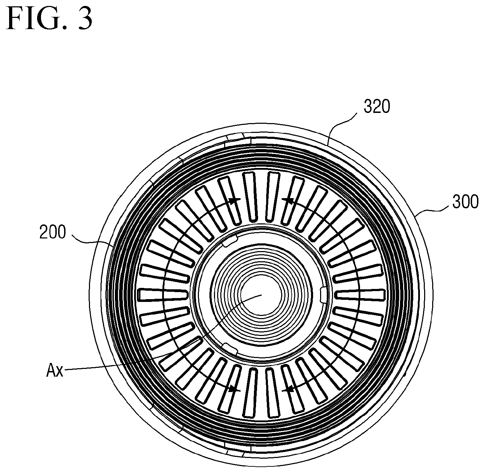

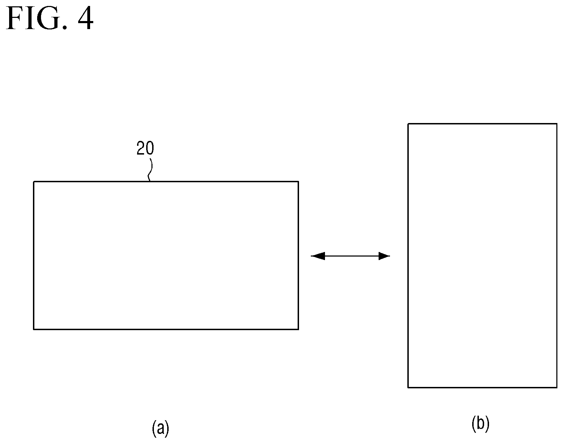

FIG. 3 is a view illustrating rotation of the camera housing 100 with respect to the sunshield 300, and FIG. 4 is a view for explaining switching of an arrangement mode of an image generated by the camera 200.

Referring to FIG. 3, the camera housing 100 may rotate with respect to the sunshield 300 about the optical axis Ax of the camera 200.

With respect to a reference object such as a ceiling or a wall, an attitude of the sunshield 300 may be maintained, and only the camera housing 100 may rotate. In this case, the light blocking portion 320 of the sunshield 300 may be continuously disposed on the upper side of the camera housing 100 and may block light from entering the camera housing 100.

A user may wish to switch the arrangement mode of an image generated by the camera 200. For example, as illustrated in FIG. 4, the user may switch the arrangement mode of an image 20 to a landscape mode or a portrait mode. The landscape mode indicates an arrangement mode of the image 20 in which a horizontal length of the image 20 is greater than a vertical length of the image 20, and the portrait mode indicates an arrangement mode of the image 20 in which the vertical length of the image 20 is greater than the horizontal length of the image 20. In FIG. 4, (a) indicates the image 20 arranged in the landscape mode, and (b) indicates the image 20 arranged in the portrait mode. For surveillance of a wide area such as a plaza, the image 20 may preferably be generated in the landscape mode, and for surveillance of a narrow area such as a corridor, the image 20 may preferably be generated in the portrait mode. The arrangement mode of the image 20 may be switched by adjusting an attitude of the camera 200.

The attitude of the camera 200 may be adjusted by adjusting the attitude of the camera housing 100. The user may freely adjust the attitude of the camera housing 100 according to the user's needs, and even in this case, the light blocking portion 320 of the sunshield 300 may be disposed on the upper side of the camera housing 100 to effectively block light.

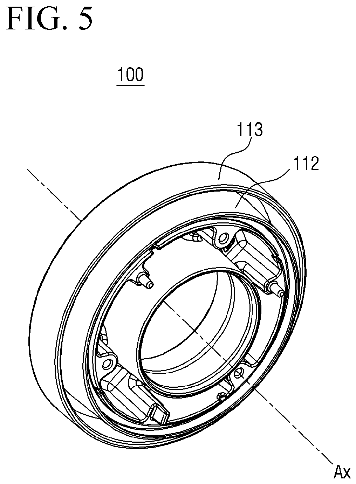

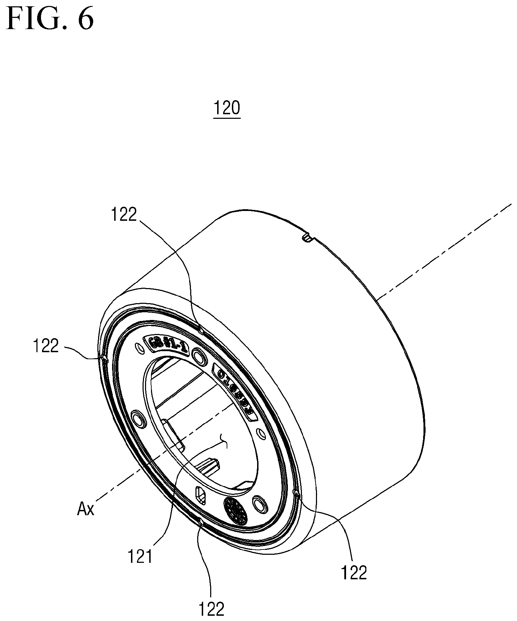

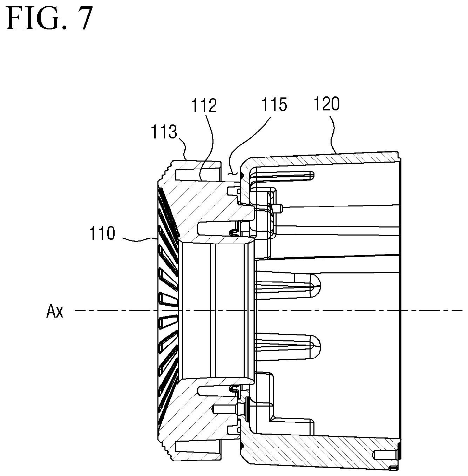

FIG. 5 is a perspective view of the front housing, FIG. 6 is a perspective view of the main housing, and FIG. 7 is a view illustrating a state in which the front housing and the main housing are coupled.

Referring to FIG. 5, the front housing 110 may have a ring shape formed about the optical axis Ax of the camera 200 and may include a base ring 112 and a support ring 113 protruding toward the sunshield 300.

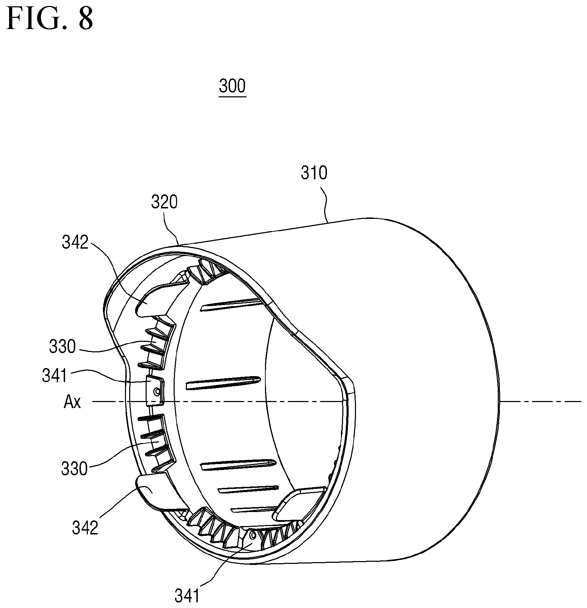

The base ring 112 may support a guide portion 330 of the sunshield 300 described later with reference to FIG. 8. The guide portion 330 may rotate while being in close contact with a surface of the base ring 112.

The support ring 113 may support a second elastic rib 342 of the sunshield 300 described later with reference to FIG. 8 to generate frictional force between the front housing 110 and the sunshield 300.

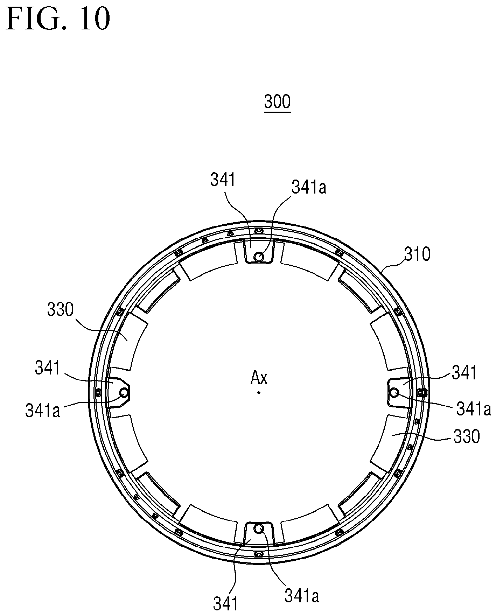

Referring to FIG. 6, the main housing 120 may include a coupling groove 122 into which a coupling protrusion 341a provided in the sunshield 300 described later with reference to FIG. 10 is insertable.

When a force equal to or greater than a predetermined magnitude is applied in a state in which the coupling protrusion 341a is inserted into the coupling groove 122, the coupling protrusion 341a may be released from the coupling groove 122, and rotation of the camera housing 100 with respect to the sunshield 300 may be performed. Thereafter, when the coupling protrusion 341a is inserted into the coupling groove 122, rotation of the camera housing 100 with respect to the sunshield 300 may be prevented.

Referring to FIG. 7, a coupled body of the front housing 110 and the main housing 120 may form a guide groove 115 having a ring shape formed about the optical axis Ax of the camera 200.

The guide groove 115 may be formed by a surface of the main housing 120 facing the front housing 110, the base ring 112, and the support ring 113. The guide portion 330 of the sunshield 300 may be inserted into the guide groove 115. The guide portion 330 may be disposed in a ring shape along the guide groove 115. As the guide portion 330 is inserted into the guide groove 115, separation of the sunshield 300 from the camera housing 100 may be prevented, and rotation of the camera housing 100 with respect to the sunshield 300 may be performed.

A shape and a size of the guide portion 330 may correspond to a shape and a size of the guide groove 115. Accordingly, as the guide portion 330 is inserted into the guide groove 115, movement of the sunshield 300 with respect to the camera housing 100 may be prevented.

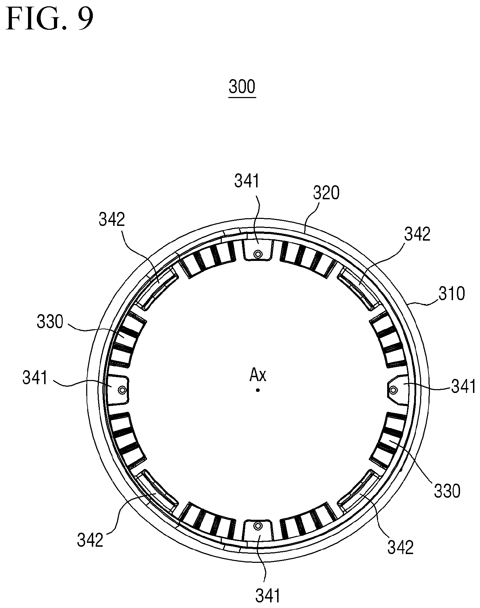

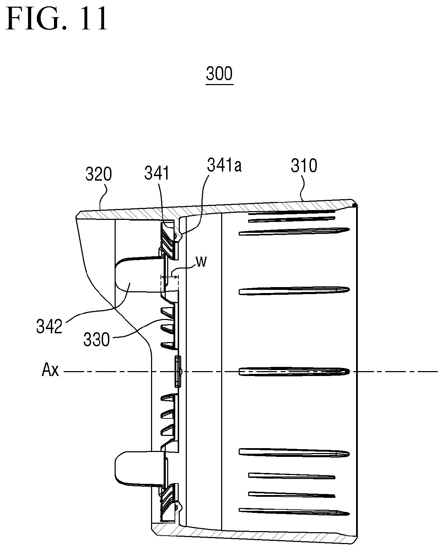

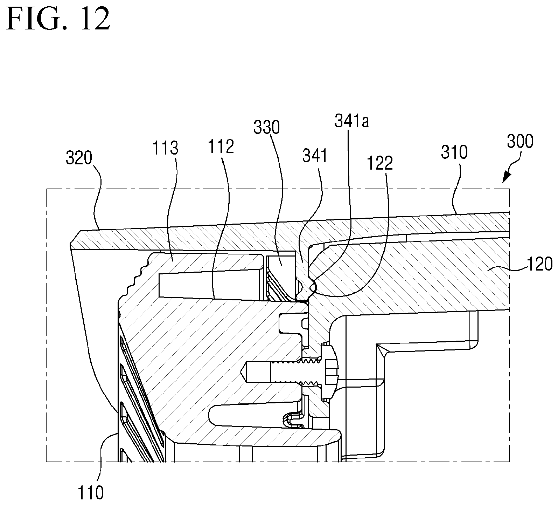

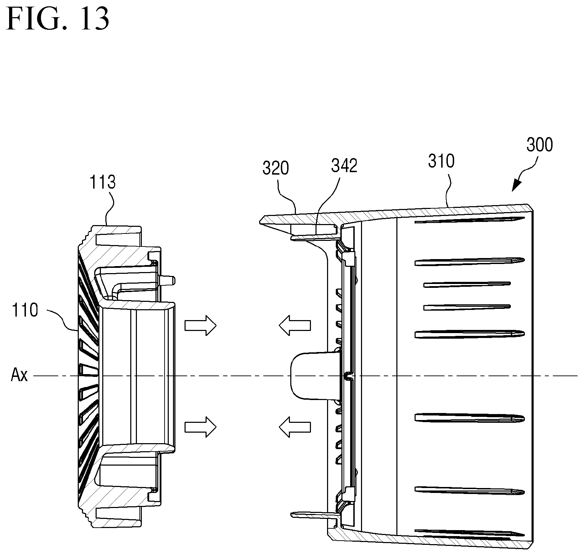

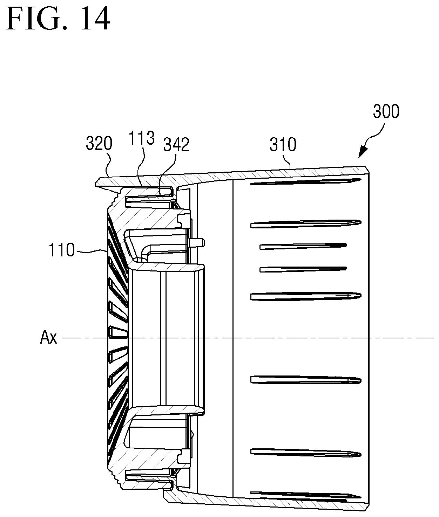

FIG. 8 is a view illustrating the sunshield, FIG. 9 is a front view of the sunshield, FIG. 10 is a rear view of the sunshield, FIG. 11 is a side cross-sectional view of the sunshield, FIG. 12 is a view illustrating a state in which the sunshield is coupled to the camera housing, FIG. 13 is a view illustrating coupling of the sunshield to the front housing, and FIG. 14 is a view illustrating a state in which the sunshield is coupled to the front housing.

Referring to FIGS. 8 to 11, the sunshield 300 may include a sunshield body 310, the light blocking portion 320, the guide portion 330, a first elastic rib 341, and the second elastic rib 342.

The sunshield body 310 may be provided in a cylindrical shape to surround the camera housing 100. On an inner surface of the sunshield body 310, the guide portion 330, the first elastic rib 341, and the second elastic rib 342 may protrude inward. For example, the guide portion 330, the first elastic rib 341, and the second elastic rib 342 may protrude toward a central axis of the sunshield body 310. Here, the central axis of the sunshield body 310 may correspond to the optical axis Ax of the camera 200.

An inner diameter of the sunshield body 310 may correspond to an outer diameter of the camera housing 100. Accordingly, movement of the sunshield 300 with respect to the camera housing 100 may be prevented.

The light blocking portion 320 may protrude forward from the sunshield body 310 and may block light from being incident on the camera housing 100.

The guide portion 330 may be inserted into the guide groove 115 of the camera housing 100. Referring to FIGS. 11 and 12, the guide portion 330 may have a thickness W corresponding to a width of the guide groove 115. One side of the guide portion 330 may be in close contact with the support ring 113 of the front housing 110, and the other side of the guide portion 330 may be in close contact with the main housing 120. As both sides of the guide portion 330 are in close contact with the front housing 110 and the main housing 120, movement of the sunshield 300 in a front-rear direction with respect to the camera housing 100 may be prevented.

Referring again to FIGS. 8 to 11, the first elastic rib 341 may be in close contact with one side surface of the main housing 120 by elastic force. For this purpose, the first elastic rib 341 may be formed of a material having an elastic modulus equal to or greater than a predetermined value.

The first elastic rib 341 may include the coupling protrusion 341a protruding toward the main housing 120. Referring to FIG. 12, the coupling protrusion 341a and the coupling groove 122 may be coupled by an elastic force of the first elastic rib 341. In a state in which the coupling protrusion 341a and the coupling groove 122 are coupled, rotation of the camera housing 100 with respect to the sunshield 300 may be prevented. Meanwhile, when a force greater than the elastic force of the first elastic rib 341 is applied, the coupling protrusion 341a may be released from the coupling groove 122, and rotation of the camera housing 100 with respect to the sunshield 300 may be performed.

At least one first elastic rib 341 may be provided. When a plurality of first elastic ribs 341 are provided, the plurality of first elastic ribs 341 may be disposed in a ring shape on the inner surface of the sunshield body 310.

Referring to FIGS. 13 and 14, the front housing 110 and the sunshield 300 may be coupled to each other by approaching each other in a direction parallel to the optical axis Ax of the camera 200.

As the front housing 110 and the sunshield 300 are coupled, the second elastic rib 342 may be in close contact with one side surface of the support ring 113 provided in the front housing 110 by elastic force. For example, the second elastic rib 342 may be in close contact with an inner surface of the support ring 113. For this purpose, an elastic force of the second elastic rib 342 may include a component in a direction perpendicular to the optical axis Ax of the camera 200. At least three second elastic ribs 342 may be provided. As the plurality of second elastic ribs 342 are in close contact with the support ring 113, frictional force between the sunshield 300 and the front housing 110 is generated, and movement of the sunshield 300 with respect to the camera housing 100 may be prevented.

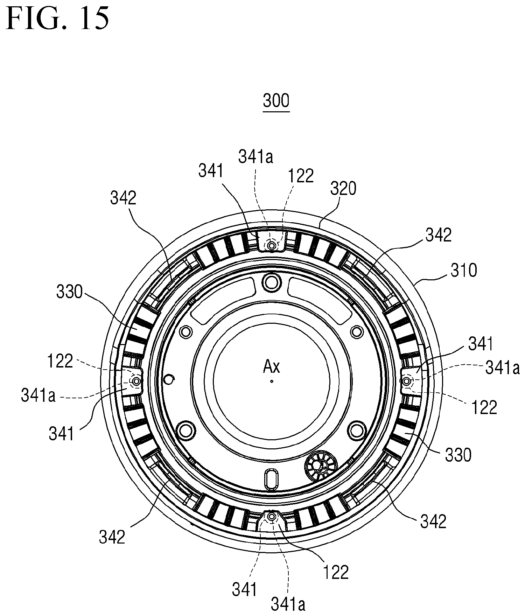

FIG. 15 is a view illustrating rotation of the main housing with respect to the sunshield.

Referring to FIG. 15, the coupling protrusion 341a formed in the first elastic rib 341 may be inserted into the coupling groove 122 formed in the main housing 120.

As the coupling protrusion 341a is inserted into the coupling groove 122, rotation of the camera housing 100 with respect to the sunshield 300 may be prevented.

In the present disclosure, at least one coupling protrusion 341a may be provided, and similarly, at least one coupling groove 122 may be provided. For example, one coupling protrusion 341a and one coupling groove 122 may be provided, one coupling protrusion 341a and a plurality of coupling grooves 122 may be provided, a plurality of coupling protrusions 341a and one coupling groove 122 may be provided, or a plurality of coupling protrusions 341a and a plurality of coupling grooves 122 may be provided. When a plurality of coupling protrusions 341a are provided, the plurality of coupling protrusions 341a may be disposed at preset intervals along a ring shape formed about the optical axis Ax of the camera 200. Alternatively, when a plurality of coupling grooves 122 are provided, the plurality of coupling grooves 122 may be disposed at preset intervals along a ring shape formed about the optical axis Ax of the camera 200. Hereinafter, description will be mainly made based on a case in which the number of coupling protrusions 341a and the number of coupling grooves 122 are the same, and a plurality of coupling protrusions 341a and a plurality of coupling grooves 122 are provided. In addition, description will be mainly made based on a case in which the plurality of coupling protrusions 341a and the plurality of coupling grooves 122 are disposed at corresponding positions. That is, the plurality of coupling protrusions 341a may be simultaneously inserted into, and simultaneously released from, respective ones of the plurality of coupling grooves 122.

At least one of the coupling protrusion 341a and the coupling groove 122 may be provided in a plurality at preset intervals along a ring shape formed about the optical axis Ax of the camera 200. Here, the preset intervals include intervals that allow the camera housing 100 to be fixed to the sunshield 300 whenever the camera housing 100 rotates by an angle of 90 degrees about the optical axis Ax of the camera 200. For example, four coupling protrusions 341a and four coupling grooves 122 may be provided, and the four coupling protrusions 341a or the four coupling grooves 122 may be disposed at equal intervals. In this case, whenever the camera housing 100 rotates by an angle of 90 degrees with respect to the sunshield 300, coupling between the four coupling protrusions 341a and the four coupling grooves 122 may be performed. Due to such a coupling relationship between the sunshield 300 and the camera housing 100, the user may easily switch the camera 200 to the landscape mode or the portrait mode.

As described above, fixing and rotation of the camera housing 100 with respect to the sunshield 300 may be performed without a separate tool. Accordingly, the user may easily adjust the attitude of the camera housing 100 with respect to the sunshield 300 to switch the arrangement mode of the image 20 generated by the camera 200.

Although the embodiments of the present disclosure have been described above with reference to the accompanying drawings, those skilled in the art to which the present disclosure pertains will understand that the present disclosure may be implemented in other specific forms without changing the technical spirit or essential features thereof. Therefore, it should be understood that the embodiments described above are illustrative in all respects and not restrictive.

## Claims

1. An attitude adjustment apparatus comprising:
a camera housing configured to accommodate a camera; and
a sunshield configured to block sunlight entering the camera housing,
wherein
the camera housing comprises: a front housing disposed at one side of the sunshield; and a main housing disposed at the other side of the sunshield and coupled to the front housing; and
by coupling the front housing and the main housing, the camera housing is rotatably coupled to the sunshield.

2. The attitude adjustment apparatus of claim 1, wherein the front housing and the main housing are coupled in a direction parallel to an optical axis of the camera.

3. The attitude adjustment apparatus of claim 1, wherein
a coupled body of the front housing and the main housing forms a guide groove having a ring shape formed about an optical axis of the camera; and
the sunshield comprises a guide portion inserted into the guide groove.

4. The attitude adjustment apparatus of claim 3, wherein the guide portion has a thickness corresponding to a width of the guide groove.

5. The attitude adjustment apparatus of claim 3, wherein the sunshield comprises a first elastic rib configured to be in close contact with one side surface of the main housing by elastic force.

6. The attitude adjustment apparatus of claim 5, wherein
the first elastic rib comprises a coupling protrusion protruding toward the main housing; and
the main housing comprises a coupling groove into which the coupling protrusion is insertable.

7. The attitude adjustment apparatus of claim 6, wherein at least one of the coupling protrusion and the coupling groove is provided in a plurality at preset intervals along a ring shape formed about an optical axis of the camera.

8. The attitude adjustment apparatus of claim 7, wherein the preset intervals comprise intervals that allow the camera housing to be fixed to the sunshield whenever the camera housing rotates by an angle of 90 degrees about the optical axis of the camera.

9. The attitude adjustment apparatus of claim 1, wherein
the front housing has a ring shape formed about an optical axis of the camera and comprises a support ring protruding toward the sunshield; and
the sunshield comprises a second elastic rib configured to be in close contact with one side surface of the support ring by elastic force.

10. The attitude adjustment apparatus of claim 8, wherein an elastic force of the second elastic rib comprises a component in a direction perpendicular to an optical axis of the camera.

11. The attitude adjustment apparatus of claim 1, wherein the camera housing is rotatable with respect to the sunshield about an optical axis of the camera.

12. The attitude adjustment apparatus of claim 1, wherein the sunshield comprises a light blocking portion protruding forward relative to a foremost edge of the camera housing.

13. The attitude adjustment apparatus of claim 1, wherein the sunshield is provided in a cylindrical shape to surround the camera housing.

14. The attitude adjustment apparatus of claim 13, wherein the sunshield and the camera housing are coupled such that a central axis of the sunshield coincides with a central axis of the camera housing.

15. An attitude adjustment apparatus comprising:
a camera housing configured to accommodate a camera; and
a sunshield configured to block sunlight entering the camera housing,
wherein
the sunshield is provided in a cylindrical shape; and
the camera housing is inserted into the sunshield and is rotatably coupled to the sunshield.

16. The attitude adjustment apparatus of claim 15, wherein
the camera housing comprises: a front housing disposed at one side of the sunshield; and a main housing disposed at the other side of the sunshield and coupled to the front housing; and
by coupling the front housing and the main housing, the camera housing is rotatably coupled to the sunshield.

17. The attitude adjustment apparatus of claim 15, wherein the front housing and the main housing are coupled in a direction parallel to an optical axis of the camera.

18. The attitude adjustment apparatus of claim 15, wherein the camera housing is rotatable with respect to the sunshield about an optical axis of the camera.

19. The attitude adjustment apparatus of claim 15, wherein the sunshield and the camera housing are coupled such that a central axis of the sunshield coincides with a central axis of the camera housing.

20. The attitude adjustment apparatus of claim 15, wherein the sunshield comprises a light blocking portion protruding forward relative to a foremost edge of the camera housing.
